# EUROPÄISCHE PATENTANMELDUNG

(11) **EP 4 293 648 A1**
(43) Veröffentlichungstag der Anmeldung: **20.12.2023**
(21) Anmeldenummer: 23179306.8
(22) Anmeldetag: 14.06.2023
(51) Int. Cl.: G09B 23/30

(54) **THERMO-PUPPE**

(30) Priorität: 15.06.2022 DE 202022103388 U
(71) Anmelder: X-CEN-TEK GmbH & Co. KG, 26203 Wardenburg (DE)
(72) Erfinder: Harms, Andreas, 26160 Bad Zwischenahn (DE)
(74) Vertreter: Meyer, Thorsten

(57) **Zusammenfassung**

Die Erfindung betrifft eine Thermo-Puppe (1) zur Schulung und Training von Bergungspersonal und/oder Rettungshunden für in einer Umgebung aufzufindende, insbesondere verschüttete Personen, wobei ein Kunstkörper (2) in menschlicher Gestalt oder flach entsprechend den Umrissen einer menschlichen Gestalt ausgestaltet ist, wobei der Kunstkörper flexibel ist und in verschiedene einem menschlichen Körper ähnliche Positionen bzw. Haltungen gebracht werden kann, wobei in oder an dem Kunstkörper (2) wenigstens ein elektrischer Stromkreis (31, 32) mit Heizleitungen (41, 42) vorhanden ist, die in etwa die Gestalt bzw. den Umriss wenigstens teilweise erwärmen zu einem ähnlich menschlichen Temperaturprofil.

## Beschreibung

Die Erfindung betrifft eine Thermo-Puppe zur Schulung und Training von Bergungspersonal und/oder Rettungshunden für in einer Umgebung aufzufindende, insbesondere verschüttete Personen.

Beim Training von Bergungspersonal oder zur Bergung eingesetzten Tieren für verschüttete Personen ist es wünschenswert möglichst realistische Situationen von Einsatzorten nachzustellen.

Beim Stand der Technik werden dabei oftmals menschliche Statisten eingesetzt was aufwändig und kostspielig ist.

Aufgabe der Erfindung ist es eine Thermo-Puppe zur Verfügung zu stellen, bei der ein erleichtertes Training ermöglicht ist.

Diese Aufgabe wird durch eine Thermo-Puppe zur Schulung und Training von Bergungspersonal für verschüttete Personen nach den Merkmalen des Anspruchs 1 gelöst.

Erfindungsgemäß ist eine Thermo-Puppe zur Schulung und Training von Bergungspersonal und/oder Rettungshunden für in einer Umgebung aufzufindende, insbesondere verschüttete Personen vorgesehen, wobei ein Kunstkörper in menschlicher Gestalt oder flach entsprechend den Umrissen einer menschlichen Gestalt ausgestaltet ist, wobei der Kunstkörper flexibel ist und in verschiedene einem menschlichen Körper ähnliche Positionen bzw. Haltungen gebracht werden kann, wobei in oder an dem Kunstkörper wenigstens ein elektrischer Stromkreis mit Heizleitungen vorhanden ist, die in etwa die Gestalt bzw. den Umriss wenigstens teilweise erwärmen zu einem ähnlich menschlichen Temperaturprofil.

Hierdurch ist auf besonders effektive Weise ein menschlicher Körper mit seinem Temperaturprofil simuliert werden, ohne dass der Einsatz von menschlichen Statisten notwendig ist. Das Training zur Auffindung von Personen beispielsweise mit Wärmebildkameras oder eingelernten Tieren in einer verschütteten Situation, unter Wasser, einer verrauchten oder mit schädlichen Gasen belasteten oder auch dunklen Umgebung ist somit ohne Komparsen möglich.

Es hat sich als vorteilhaft erwiesen, wenn gemäß einer Ausgestaltung der Erfindung der der Kunstkörper aus einem Schaumstoff oder einem flexiblen Kunststoff hergestellt ist.

Bevorzugterweise sind in dem Kunstkörper mehrere elektrische Stromkreise und/oder Heizleitungen vorgesehen, die eine Erwärmung in wenigstens Bereichen des vollen Umfangs des Kunstkörpers oder entsprechend einem kleineren menschlichen Körper, insbesondere eines Kindes, ermöglicht. Hierdurch ist mit demselben Kunstkörper eine Simulation eines Erwachsenen als auch eines Kindes ermöglicht.

Von Vorteil erfolgt die Erwärmung durch Heizleitungen in Form eines elektrischen Leiters in oder am Kunstkörper, wobei der Leiter entlang der Kontur bzw. den Rändern der Außenflächen des darzustellenden menschlichen Profils eines menschlichen Körpers verlegt ist und durch einen Strom mit dem elektrischen Widerstand die Erwärmung erzeugt.

Ebenso von Vorteil sind die Heizleitungen so angesteuert werden können bzw. ausgebildet sind, dass nur bestimmte Bereiche des darzustellenden menschlichen Profils des Kunstkörpers erwärmbar sind. Hierdurch kann beispielsweise nur ein Torso oder auch einzelne Beine simuliert werden.

Bevorzugterweise ist der elektrische Leiter aus Carbon oder Metall hergestellt.

Um beispielsweise Verschmutzungen leichter entfernbar zu machen kann der der Kunstkörper nach einer weiteren Ausgestaltung beidseitig oder einseitig mit einer Schutzschicht beschichtet ist.

Weitere vorteilhafte Ausgestaltungen ergeben sich aus den weiteren Unteransprüchen oder deren mögliche Unterkombinationen.

Nachfolgend wird die Erfindung anhand der Zeichnungen weiter erläutert. Im Einzelnen zeigt die schematische Darstellung in:
- Fig. 1: eine schematische Darstellung einer erfindungsgemäßen Thermo-Puppe in einer Draufsicht,
- Fig. 2: eine schematische Darstellung der erfindungsgemäßen Thermo-Puppe aus Fig. 1 von hinten, und
- Fig. 3: eine schematische Darstellung Thermo-Puppe in einer typischen Körperhaltung.

Die in den Figuren gleichen Bezugsziffern bezeichnen gleiche oder gleich wirkende Elemente.

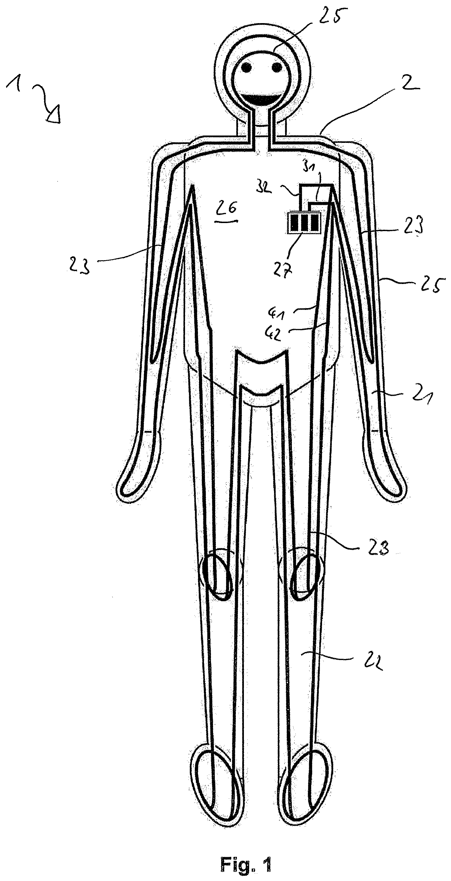

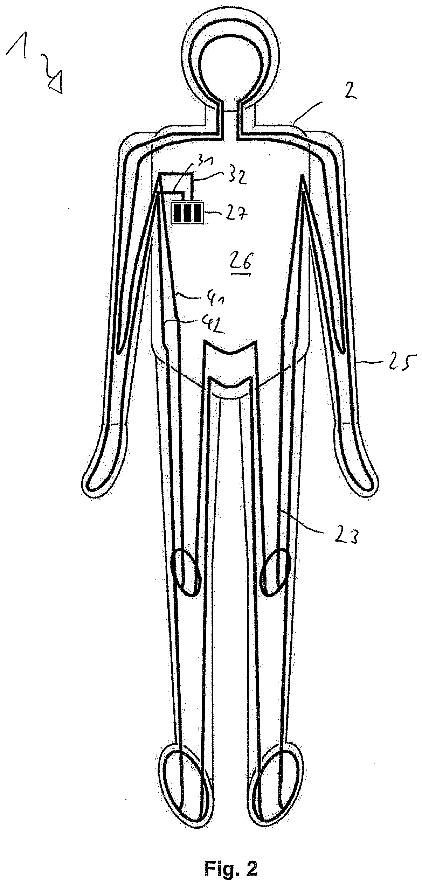

In Fig. 1 ist eine Thermo-Puppe 1 zur Schulung und Training von Bergungspersonal und/oder Rettungshunden für aufzufindende Personen gezeigt. Fig. 2 zeigt die Thermo-Puppe 1 von der Rückseite.

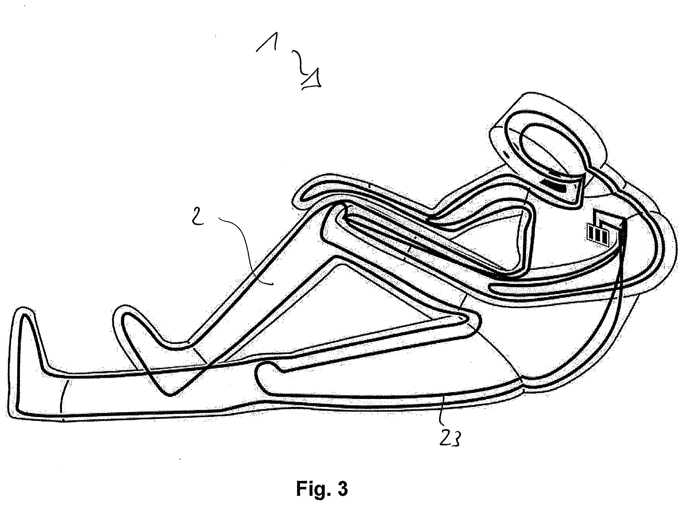

Ein Kunstkörper 2 ist im gezeigten Beispiel flach entsprechend den Umrissen einer menschlichen Gestalt ausgestaltet. Dabei ist der Kunstkörper flexibel und kann hierdurch in verschiedene einem menschlichen Körper ähnliche Positionen bzw. Haltungen gebracht werden (siehe hierzu Fig. 3). Zur Erlangung der Flexibilität ist der Kunstkörper 2 aus einem Schaumstoff oder einem flexiblen Kunststoff hergestellt.

Um die Oberflächen des Kunstkörpers 2 zu schützen sind diese beidseitig mit einer Schutzschicht 26 beschichtet.

Zur Erzeugung eines vorgewählten Temperaturprofils sind in dem Kunstkörper 2 mehrere elektrische Stromkreise 31, 32 mit Heizleitungen 41, 42 eingearbeitet, die in etwa die Gestalt bzw. den Umriss wenigstens teilweise erwärmen zu einem ähnlich menschlichen Temperaturprofil.

In dem Kunstkörper 2 sind mehrere elektrische Stromkreise 31, 32 mit Heizleitungen 41, 42 in Form eines elektrischen Leiters entlang der Kontur 25 bzw. den Rändern der Außenflächen des darzustellenden menschlichen Profils eines menschlichen Körpers verlegt. Die Erwärmung wird durch einen Strom aus einer Stromquelle 27 in Form von Batterien mit dem elektrischen Widerstand der Leitungen bewirkt.

Die mehreren Stromkreise 31, 32 ermöglichen eine Erwärmung in Bereichen 21, 22 des vollen Umfangs des Kunstkörpers oder entsprechend einem kleineren menschlichen Körper, insbesondere eines Kindes 23.

### Bezugszeichenliste

- 1: Thermo-Puppe

- 2: Kunstkörper
- 21,22: Bereich des Kunstkörpers
- 23: Kinderumriss
- 24: Erwachsenenumriss
- 25: Kontur
- 26: Schutzschicht
- 27: Stromquelle

- 31,32: Stromkreis

- 41,42: Heizleitung

## Patentansprüche

1. Thermo-Puppe (1) zur Schulung und Training von Bergungspersonal und/oder Rettungshunden für in einer Umgebung aufzufindende, insbesondere verschüttete Personen,
**dadurch gekennzeichnet,**
**dass** ein Kunstkörper (2) in menschlicher Gestalt oder flach entsprechend den Umrissen einer menschlichen Gestalt ausgestaltet ist, wobei der Kunstkörper flexibel ist und in verschiedene einem menschlichen Körper ähnliche Positionen bzw. Haltungen gebracht werden kann, wobei in oder an dem Kunstkörper (2) wenigstens ein elektrischer Stromkreis (31, 32) mit Heizleitungen (41, 42) vorhanden ist, die in etwa die Gestalt bzw. den Umriss wenigstens teilweise erwärmen zu einem ähnlich menschlichen Temperaturprofil.

2. Thermo-Puppe (1) nach Anspruch 1,
**dadurch gekennzeichnet,**
**dass** der Kunstkörper (2) aus einem Schaumstoff oder einem flexiblen Kunststoff hergestellt ist.

3. Thermo-Puppe (1) nach Anspruch 1 oder 2,
**dadurch gekennzeichnet,**
**dass** in dem Kunstkörper (2) mehrere elektrische Stromkreise (31, 32) und/oder Heizleitungen (41, 42) vorgesehen sind, die eine Erwärmung in wenigstens Bereichen (21, 22) des vollen Umfangs des Kunstkörpers oder entsprechend einem kleineren menschlichen Körper, insbesondere eines Kindes (23), ermöglicht.

4. Thermo-Puppe (1) nach einem der vorhergehenden Ansprüche,
**dadurch gekennzeichnet,**
**dass** die Erwärmung durch Heizleitungen (41, 42) in Form eines elektrischen Leiters in oder am Kunstkörper (2) erfolgt, wobei der Leiter entlang der Kontur (25) bzw. den Rändern der Außenflächen des darzustellenden menschlichen Profils eines menschlichen Körpers verlegt ist und durch einen Strom mit dem elektrischen Widerstand die Erwärmung erzeugt.

5. Thermo-Puppe (1) nach Anspruch 3 oder 4,
**dadurch gekennzeichnet,**
**dass** die Heizleitungen (41, 42) so angesteuert werden können bzw. ausgebildet sind, dass nur bestimmte Bereiche (21, 22, 23) des darzustellenden menschlichen Profils des Kunstkörpers (2) erwärmbar sind.

6. Thermo-Puppe (1) nach Anspruch 3, 4 oder 5,
**dadurch gekennzeichnet,**
**dass** der elektrische Leiter aus Carbon oder Metall hergestellt ist.

7. Thermo-Puppe (1) nach einem der vorhergehenden Ansprüche,
**dadurch gekennzeichnet,**
**dass** der Kunstkörper (2) beidseitig oder einseitig mit einer Schutzschicht (26) beschichtet ist.
